# EUROPEAN PATENT APPLICATION

(11) **EP 3 766 563 A1**
(43) Date of publication of application: **20.01.2021**
(21) Application number: 19768293.3
(22) Date of filing: 04.03.2019
(51) Int. Cl.: B01D 39/08, B01D 46/02, B01D 53/64, B01D 53/88, B01J 20/20, B01J 23/20, B01J 23/24

(54) **FILTER CLOTH, BAG FILTER, GAS PROCESSING APPARATUS EQUIPPED WITH SAME, AND METHOD FOR PRODUCING FILTER CLOTH**

(30) Priority: 14.03.2018 JP 2018047004
(71) Applicant: MITSUBISHI HEAVY INDUSTRIES, LTD., Chiyoda-ku Tokyo 100-8332 (JP)
(72) Inventor: KATSUKI Masatoshi, Tokyo 100-8332 (JP); SUZUKI Takumi, Tokyo 100-8332 (JP)
(74) Representative: Studio Torta S.p.A.
(86) International application number: PCT/JP2019/008370
(87) International publication number: WO 2019/176617

(57) **Abstract**

A filter cloth (10) includes one filter cloth substrate (11) which is formed of a plurality of fibers, particulate adsorbents (17) which include activated carbon and have an ability to absorb Hg, and particulate catalysts (16) which have an ability to promote oxidation of Hg. The filter cloth substrate (11) has a first surface (12) and a second surface (13) facing sides opposite to each other. The ratio of a the density of the catalysts (16) to the density of the adsorbents (17) at a predetermined position on an upstream side (Du) from the second surface (13) is higher than the a ratio of the density of the catalysts (16) to the density of the adsorbents (17) at a part on a downstream side (Dd) from the predetermined position.

## Description

### [Technical Field]

The present invention relates to a filter cloth, a bag filter, a gas processing apparatus equipped with the same, and a method for producing a filter cloth.

Priority is claimed on Japanese Patent Application No. 2018-047004, filed March 14, 2018, the content of which is incorporated herein by reference.

### [Background Art]

Regarding bag filters, for example, there is a bag filter described in the following Patent Document 1. A filter cloth of this bag filter has a filter cloth substrate which is formed of a plurality of fibers, and activated carbon and catalysts which adhere to this filter cloth substrate. This filter cloth is manufactured such that the activated carbon and the catalysts are mixed together in the filter cloth substrate and these are uniformly distributed.

### [Citation List]

### [Patent Document]

[Patent Document 1]
Japanese Unexamined Patent Application, First Publication No. H10-066814

### [Summary of Invention]

### [Technical Problem]

Activated carbon has an ability to absorb Hg. Therefore, if the filter cloth described in the foregoing Patent Document is used, Hg in gas can be removed. However, in the field of gas processing, there is a demand for efficient removal of Hg.

Hence, an object of the present invention is to provide a technology capable of efficiently removing Hg in gas.

### [Solution to Problem]

According to an aspect of the present invention for achieving the foregoing object, there is provided a filter cloth including one filter cloth substrate which is formed of a plurality of fibers, particulate adsorbents which include activated carbon and have an ability to absorb Hg, and particulate catalysts which have an ability to promote oxidation of Hg. The one filter cloth substrate has a first surface and a second surface facing sides opposite to each other. The ratio of the density of the catalysts to the density of the adsorbents at a predetermined position on an upstream side that is the first surface side from the second surface is higher than the ratio of the density of the catalysts to the density of the adsorbents at a part on a downstream side that is the second surface side from the predetermined position.

In ordinary activated carbon that is activated carbon not impregnated with a halide, the higher the concentration of bivalent mercury, the higher an adsorption rate of mercury. In contrast, when the concentration of bivalent mercury is low and the concentration of zerovalent mercury becomes higher, the adsorption rate of mercury drops. For this reason, in order to raise the adsorption rate of mercury in ordinary activated carbon, it is preferable that this ordinary activated carbon be disposed under an environment of a high concentration of bivalent mercury.

When gas including mercury is caused to flow from the upstream side toward the downstream side with respect to the filter cloth of the present aspect, a large part of the mercury in this gas becomes bivalent mercury due to a number of catalysts which have adhered at a predetermined position on the filter cloth substrate. Thereafter, a large part of the bivalent mercury is adsorbed by a large amount of activated carbon which has adhered on the downstream side from the predetermined position.

Thus, in the present aspect, the oxidation ability of the catalysts and the adsorption ability of the adsorbents can effectively function, and mercury can be efficiently adsorbed. In addition, since the adsorbents of the present aspect includes activated carbon, dioxin, heavy metal, or the like can also be adsorbed by this activated carbon.

Here, the filter cloth may further include a region in which the ratio of the density of the catalysts to the density of the adsorbents gradually decreases toward the downstream side.

In addition, in the filter cloth of any one of the foregoing aspects, the predetermined position may be a position on the first surface.

In addition, in the filter cloth of any one of the foregoing aspects, the adsorbents and the catalysts may not adhere onto the second surface.

In the filter cloth of any one of the foregoing aspects, the adsorbents may include the activated carbon and a halide. The activated carbon may be impregnated with the halide. The halide and the activated carbon may form particulate impregnated activated carbon.

In impregnated activated carbon, even if the concentration of bivalent mercury varies, there is a slight variation in the adsorption rate of mercury. Further, this adsorption rate substantially coincides with the adsorption rate of ordinary activated carbon at the time when the concentration of bivalent mercury is 100 wt%. In addition, in ordinary activated carbon, due to a relationship in which the adsorption rate varies in accordance with the concentration of mercury, a part of mercury adsorbed at the time of a high concentration of mercury is sometimes released when the concentration of mercury becomes low. On the other hand, in impregnated activated carbon which has once adsorbed mercury, this mercury is not released unless special processing is performed.

For this reason, in the present aspect, regardless of the concentration of bivalent mercury, mercury is stably adsorbed, and release of adsorbed mercury can be curbed.

In the filter cloth having the impregnated activated carbon, the particulate impregnated activated carbon and the particulate activated carbon may be mixed together in the adsorbents.

In the present aspect, regardless of the concentration of bivalent mercury, mercury is stably adsorbed by changing a mixing proportion of the particulate impregnated activated carbon and the particulate activated carbon, and when it is desired that adsorbed mercury be prevented from being released, or even if sudden increase of the concentration of mercury temporarily occurs a number of times, it is also possible to cope with a case in which a usage period of the adsorbents is extended.

According to another aspect of the present invention for achieving the foregoing object, there is provided a bag filter including a filter which is formed of the filter cloth according to any one of the foregoing aspects, and a bag filter case which internally accommodates the filter. The bag filter case has an inlet through which gas flows in and an outlet through which gas flows out. The filter partitions an inside of the bag filter case into a space on the inlet side and a space on the outlet side and is disposed such that the first surface of the filter cloth substrate forming the filter faces the space on the inlet side.

In the present aspect, particulates such as dust included in gas can be captured by the filter cloth forming the filter. Moreover, in the present aspect, mercury included in gas can be adsorbed by the adsorbents of this filter cloth.

According to another aspect of the present invention for achieving the foregoing object, there is provided a gas processing apparatus including the foregoing bag filter, an upstream-side pipe which is configured to introduce gas from a gas generation source to the inlet of the bag filter, and an adsorbent feeding device which is configured to feed particulate adsorbents including activated carbon and having an ability to absorb Hg into the upstream-side pipe.

Here, the gas processing apparatus may further include a concentration meter which is configured to detect a Hg concentration in the gas, and a feeding amount control device which is configured to control the amount of the adsorbents fed into the upstream-side pipe from the adsorbent feeding device in accordance with the Hg concentration detected by the concentration meter.

In addition, the gas processing apparatus including the feeding amount control device may include a downstream-side pipe which is connected to the outlet of the bag filter. The concentration meter may detect the Hg concentration in gas flowing in the downstream-side pipe.

According to another aspect of the present invention for achieving the foregoing object, there is provided a method for producing a filter cloth and executing a preparation step of preparing one filter cloth substrate which is formed of a plurality of fibers, adsorbent slurry which contains adsorbents including activated carbon and having an ability to absorb Hg, and catalyst slurry which contains particulate catalysts having an ability to promote oxidation of Hg, an adsorbent spraying step of spraying the adsorbent slurry onto a first surface, of the first surface and a second surface facing sides opposite to each other in the one filter cloth substrate, toward a downstream side that is a side of the second surface with respect to the first surface, and a catalyst spraying step of spraying the catalyst slurry onto the first surface toward the downstream side after the adsorbent spraying step.

Here, in the method for producing a filter cloth, a catalyst concentration in the catalyst slurry may be higher than an adsorbent concentration in the adsorbent slurry.

### [Advantageous Effects of Invention]

According to the aspects of the present invention, Hg in gas can be efficiently removed.

### [Brief Description of Drawings]

Fig. 1 is a cross-sectional view of a filter cloth according to an embodiment of the present invention.
Fig. 2 is a flowchart showing a manufacturing procedure of the filter cloth according to the embodiment of the present invention.
Fig. 3 is a cross-sectional view of a filter cloth substrate during an adsorbent spraying step according to the embodiment of the present invention.
Fig. 4 is a cross-sectional view of the filter cloth substrate during a catalyst spraying step according to the embodiment of the present invention.
Fig. 5 is a graph showing a relationship between the concentration of bivalent mercury and an adsorption rate of mercury.
Fig. 6 is a cross-sectional view of a bag filter according to the embodiment of the present invention.
Fig. 7 is a system diagram of a gas processing apparatus according to the embodiment of the present invention.

### [Description of Embodiment]

Embodiments of a filter cloth, a bag filter including this filter cloth, and a gas processing apparatus according to the present invention will be described with reference to the drawings.

### Embodiment of filter cloth

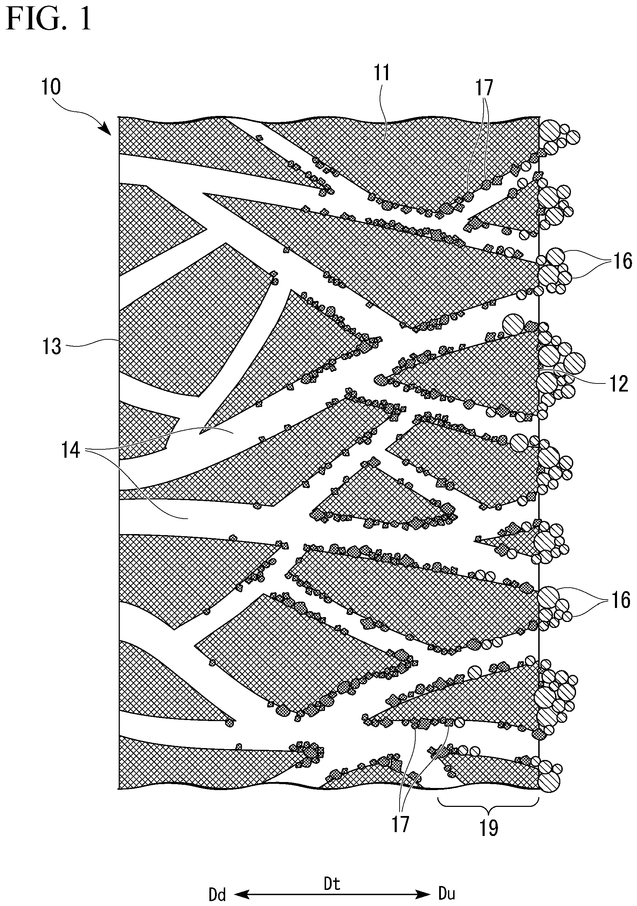

Hereinafter, an embodiment of the filter cloth according to the present invention will be described with reference to Figs. 1 to 5.

As shown in Fig. 1, a filter cloth 10 of the present embodiment includes a filter cloth substrate 11 which is formed of a plurality of fibers, particulate adsorbents 17, and particulate catalysts 16 which promote oxidation of Hg.

The filter cloth substrate 11 has a first surface 12 and a second surface 13. The first surface 12 and the second surface 13 face sides opposite to each other. The distance between the first surface 12 and the second surface 13 is the thickness of the filter cloth substrate 11. Hereinafter, with respect to a thickness direction Dt of the filter cloth substrate 11, a side of the second surface 13 with respect to the first surface 12 is referred to as a downstream side Dd, and a side of the first surface 12 with respect to the second surface 13 is referred to as an upstream side Du. In the filter cloth substrate 11, spaces between the plurality of fibers form gas flow channels 14 through which gas (processing target) passes.

Examples of fibers forming the filter cloth substrate 11 include glass fibers, polyfluoroethylene-based fibers, polyester-based fibers, polyamide-based fibers, and polyphenylene sulfide-based fibers. Fibers having high heat resistance of the foregoing fibers are glass fibers and polyfluoroethylene-based fibers. It is preferable that diameters of the fibers be within a range of 3 to 15 µm. Regarding a method of weaving fibers, any of twill weaving, satin weaving, plain weaving, and the like may be adopted. It is preferable that a thread density of cloth serving as the filter cloth substrate 11 be within a range of 600 to 1,200 g/m². If the thread density is equal to or higher than a lower limit, powder in gas can be sufficiently captured, and if it is equal to or lower than an upper limit, clogging can be curbed.

The average particle diameter of the particulate adsorbents 17 is within a range of 1 µm to 50 µm, for example. Here, the particulate adsorbents 17 are particulate activated carbon having a function of adsorbing mercury (Hg). As described below, particulate impregnated activated carbon may be used as the particulate adsorbents 17. Moreover, a mixture of particulate activated carbon and particulate impregnated activated carbon may be used as the particulate adsorbents 17. Impregnated activated carbon used herein is a substance in which particulate activated carbon is impregnated with a halide. Bromine (Br) is an example of a halide with which activated carbon is impregnated.

An average particle diameter of the particulate catalysts 16 is within a range of 1 µm to 100 µm, for example. The catalysts 16 have carriers and an active component. Regarding the carriers of the catalysts 16, single oxide or complex oxide including at least one or more elements selected from titanium (Ti), silicon (Si), aluminum (Al), zirconium (Zr), phosphorus (P), and boron (B) is adopted. Regarding the active component of the catalysts 16, oxide of at least one of vanadium (V), tungsten (W), molybdenum (Mo), niobium (Nb), and tantalum (Ta), or complex oxide of these is adopted. It is preferable to use at least titanium oxide as carriers. It is preferable to use at least vanadium oxide as an active component. All the active components exemplified above have an ability to oxidize various substances including mercury and can also perform oxidative decomposition of dioxin.

The composition of the catalysts 16 is not particularly limited. When the active component consists of one component such as vanadium pentoxide, it is preferable to have 1 to 20 parts by mass of active substances with respect to 100 parts by mass of carriers. When the active component consists of two components such as vanadium pentoxide and tungsten trioxide, it is preferable to have 1 to 10 parts by mass of vanadium pentoxide and 2 to 25 parts by mass of tungsten trioxide with respect to 100 parts by mass of carriers.

Both the particulate adsorbents 17 and the particulate catalysts 16 adhere to one filter cloth substrate 11. In one filter cloth substrate 11, a region in which the particulate adsorbents 17 are distributed does not coincide with a region in which the particulate catalysts 16 are distributed.

The particulate catalysts 16 adhere onto the first surface 12 of the filter cloth substrate 11. The adhering amount of the particulate catalysts 16 on the first surface 12 is larger than the adhering amount of the particulate adsorbents 17 on the first surface 12. Here, an adhering amount indicates mass per unit area of an adhesive material. The adhering amount of the particulate catalysts 16 gradually decreases toward the downstream side Dd from the first surface 12 and practically becomes zero in the vicinity of the second surface 13. On the other hand, the adhering amount of the particulate adsorbents 17 gradually decreases after gradually increasing toward the downstream side Dd from the first surface 12 and practically becomes zero in the vicinity of the second surface 13. The catalysts 16 and the adsorbents 17 adhere to inner surfaces of the gas flow channels 14 which are formed in the filter cloth substrate 11 between the first surface 12 and the second surface 13.

In other words, in the present embodiment, the ratio of the density of the catalysts 16 to the density of the adsorbents 17 at a predetermined position on the upstream side Du from the second surface 13 is higher than the ratio of the density of the catalysts 16 to the density of the adsorbents 17 at a part on the downstream side Dd from the predetermined position. In addition, the filter cloth 10 of the present embodiment has a ratio variation region 19 in which the ratio of the density of the catalysts 16 to the density of the adsorbents 17 gradually decreases toward the downstream side Dd. In the present embodiment, the predetermined position is a position on the first surface 12. In addition, in the present embodiment, the adsorbents 17 and the catalysts 16 do not practically adhere onto the second surface 13. The density of an adhesive material indicates mass per unit volume of an adhesive material in the filter cloth substrate 11.

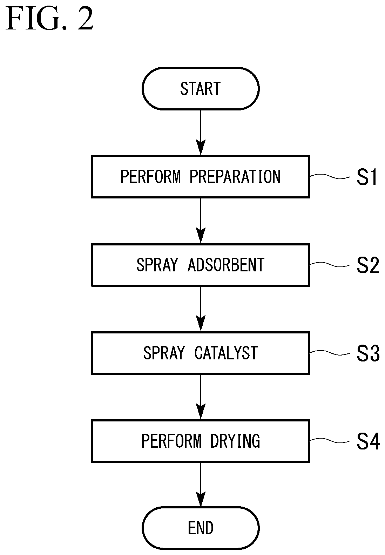

Next, a method of manufacturing the filter cloth 10 described above will be described in accordance with the flowchart shown in Fig. 2.

First, one filter cloth substrate 11, adsorbent slurry containing the adsorbents 17, and catalyst slurry containing the catalysts 16 are prepared (S1: preparation step). The adsorbent slurry is formed by incorporating the particulate adsorbents 17 into water. The catalyst slurry is formed by incorporating the particulate catalysts 16 into water. It is preferable that the concentration of the adsorbents 17 in the adsorbent slurry be lower than the concentration of the catalysts 16 in the catalyst slurry. Specifically, it is preferable that the concentration of the adsorbents 17 in the adsorbent slurry be within a range of 5 wt% to lower than 15 wt% and the concentration of the catalysts 16 in the catalyst slurry be 15 wt% or higher. It is more preferable that the concentration of the adsorbents 17 in the adsorbent slurry be within a range of 5 wt% to lower than 12 wt%.

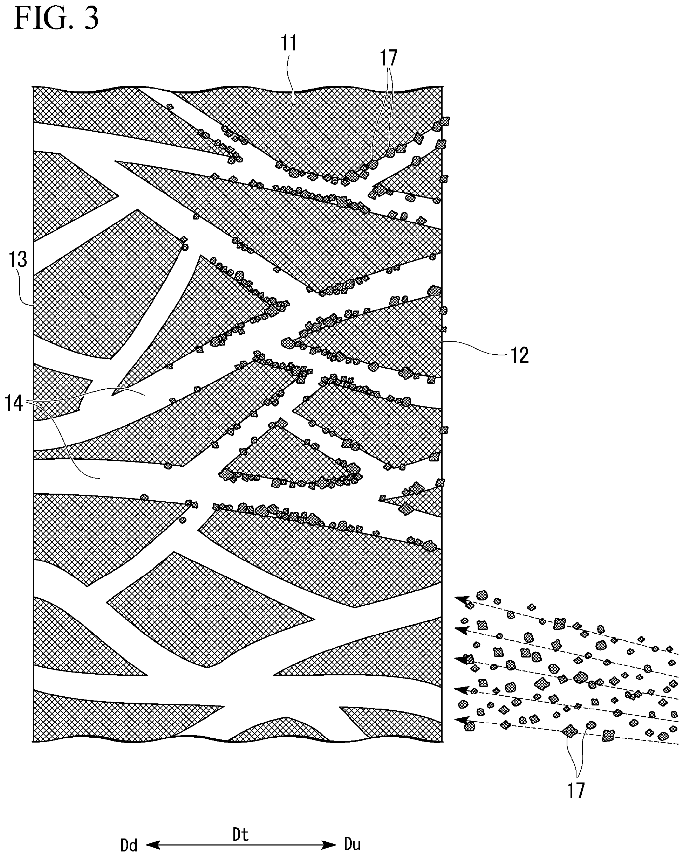

Next, as shown in Fig. 3, the adsorbent slurry is sprayed onto the first surface 12 toward the downstream side Dd (S2: adsorbent spraying step). As a result, the adsorbents 17 in the adsorbent slurry adhere to the first surface 12 of the filter cloth substrate 11 and the inner surfaces of the plurality of gas flow channels 14 of the filter cloth substrate 11. In this adsorbent spraying step (S2), the adhering amount of the particulate adsorbents 17 can gradually decrease after gradually increasing toward the downstream side Dd from the first surface 12 and can practically become zero in the vicinity of the second surface 13 by adjusting a spraying pressure and a spraying flow rate of the adsorbent slurry.

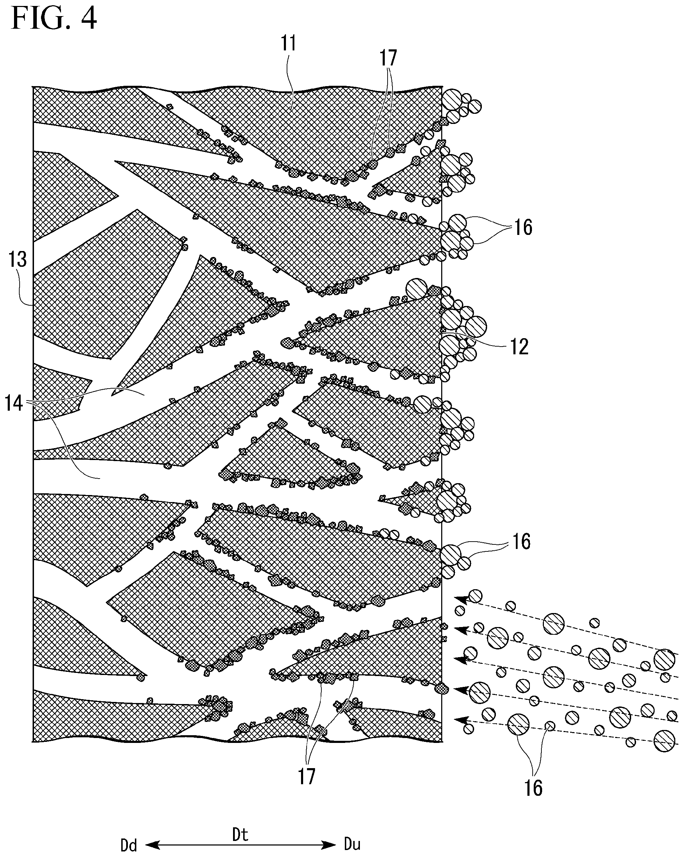

Next, as shown in Fig. 4, the catalyst slurry is sprayed onto the first surface 12 toward the downstream side Dd (S3: catalyst spraying step). As a result, the catalysts 16 in the catalyst slurry adhere to the first surface 12 of the filter cloth substrate 11 and the inner surfaces of the plurality of gas flow channels 14 of the filter cloth substrate 11. However, since the adsorbents 17 which have already adhered to the inner surfaces of the plurality of gas flow channels 14 of the filter cloth substrate 11 become obstacles and the concentration of the catalysts 16 in the catalyst slurry is higher than the concentration of the adsorbents 17 in the adsorbent slurry, it is difficult for the catalysts 16 to enter an inner side of the gas flow channels 14, that is, the downstream side Dd. For this reason, a large part of the catalysts 16 in the catalyst slurry adheres to the first surface 12 of the filter cloth substrate 11. In addition, the remaining catalysts 16 in the catalyst slurry adhere to a part on the upstream side Du on the inner surfaces of the plurality of gas flow channels 14.

As described above, when the catalyst spraying step (S3) is executed after the adsorbent spraying step (S2) is executed, the distribution of the particulate adsorbents 17 and the distribution of the particulate catalysts 16 in one filter cloth substrate 11 become the distributions described beforehand.

Next, the filter cloth substrate 11 to which the adsorbents 17 and the catalysts 16 adhere are dried (S4: drying step). The filter cloth 10 of the present embodiment is hereby completed.

During the preparation step (S1), a step of forming catalyst slurry need only be executed before the catalyst spraying step (S3) and need not be executed before the adsorbent spraying step (S2).

Next, effects of the filter cloth 10 described above will be described.

The catalysts 16 have an ability to oxidize substances in gas as described above. For this reason, when zerovalent mercury is included in gas, the catalysts 16 oxidize this zerovalent mercury to bivalent mercury as shown below.

Hg⁰→Hg²⁺+2e⁻

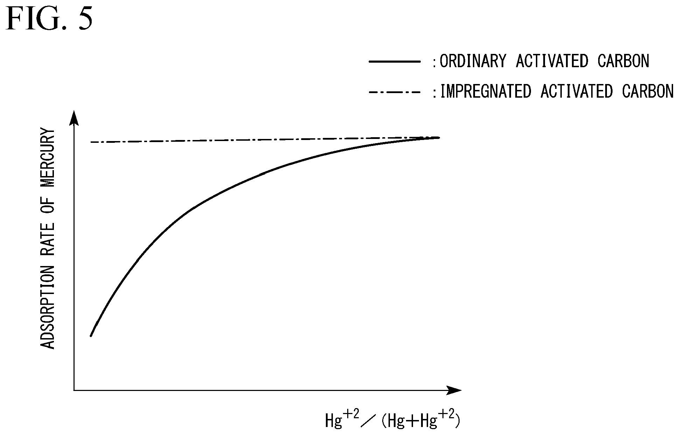

In ordinary activated carbon which consists of only activated carbon and in which this activated carbon is not impregnated with a halide, as shown in Fig. 5, the higher the concentration of bivalent mercury (Hg²+), the higher the adsorption rate of mercury. In contrast, as the concentration of bivalent mercury becomes low and the concentration of zerovalent mercury (Hg⁰) becomes higher, the adsorption rate of mercury drops. For this reason, in order to raise the adsorption rate of mercury in ordinary activated carbon, it is preferable that this ordinary activated carbon be disposed under an environment of a high concentration of bivalent mercury.

When gas including mercury is caused to flow from the upstream side Du toward the downstream side Dd with respect to the filter cloth 10 of the present embodiment, a large part of the mercury in this gas becomes bivalent mercury due to a number of the catalysts 16 which have adhered to the first surface 12 of the filter cloth substrate 11. A large part of the bivalent mercury is bonded to chlorine and the like included in the gas. Thereafter, a large part of bivalent mercury is adsorbed by a large amount of ordinary activated carbon which has adhered in the gas flow channels 14 of the filter cloth substrate 11.

For instance, it is assumed that the distribution of ordinary activated carbon and the distribution of the catalysts 16 are substantially uniform in the thickness direction Dt of the filter cloth substrate 11. In this case, activated carbon positioned at a part on the upstream side Du in the filter cloth substrate 11 is placed in an environment of a low concentration of bivalent mercury, and thus the adsorption rate of mercury is low. For this reason, in this filter cloth, mercury cannot be efficiently adsorbed.

On the other hand, in the filter cloth 10 of the present embodiment, a number of catalysts 16 adhere to a part of the filter cloth substrate 11 on the upstream side Du, and a number of adsorbents 17 including ordinary activated carbon adhere on the downstream side Dd from this position. Therefore, a large amount of ordinary activated carbon is placed in an environment of a high concentration of bivalent mercury. Thus, in the filter cloth 10 of the present embodiment, mercury can be efficiently adsorbed. In addition, since the adsorbents 17 of the present embodiment include activated carbon, toxic substances such as dioxin can also be adsorbed.

Here, for instance, it is assumed that filter cloths of two kinds are present as follows. A first filter cloth has two filter cloth substrates and is a filter cloth in which the particulate catalysts 16 adhere to a first filter cloth substrate and the particulate adsorbents 17 adhere to a second filter cloth substrate. A second filter cloth is a filter cloth in which the adsorbents 17 or the catalysts 16 are kneaded into fibers constituting the filter cloth substrate.

Since the first filter cloth includes two filter cloth substrates, a pressure loss of gas increases, and the manufacturing cost runs up. On the other hand, the filter cloth 10 of the present embodiment is constituted of only one filter cloth substrate 11. For this reason, in the filter cloth 10 of the present embodiment, compared to the first filter cloth, a pressure loss of gas can be curbed, and a rise in the manufacturing cost can be curbed.

In the second filter cloth, the adsorbents 17 or the catalysts 16 are kneaded into fibers constituting the filter cloth substrate. Therefore, the adsorbents or the catalysts are not always present in the gas flow channels in the filter cloth substrate so that a contact ratio between the gas and the adsorbents 17 or the catalysts 16 is low, and thus the adsorption rate of mercury becomes low. On the other hand, in the filter cloth 10 of the present embodiment, the adsorbents 17 or the catalysts 16 adhere to the first surface 12 of the filter cloth substrate 11 or the inner surfaces of the gas flow channels 14 of the filter cloth substrate 11. For this reason, in the filter cloth 10 of the present embodiment, compared to the second filter cloth, the contact ratio between the gas and the adsorbents 17 and the contact ratio between the gas and the catalysts 16 are high, and thus the adsorption rate of mercury can be increased.

### Modification example of filter cloth

A predetermined position in the thickness direction Dt in the filter cloth substrate 11 of the foregoing embodiment is a position on the first surface 12. However, this predetermined position need only be a position on the upstream side Du from the second surface 13 and may be a position between the first surface 12 and the second surface 13.

Regarding a method of manufacturing such a filter cloth, for example, there are two methods as follows. In a first method, the concentration of the adsorbents 17 in the adsorbent slurry is caused to be lower than that in the foregoing embodiment, and the concentration of the catalysts 16 in the catalyst slurry is caused to be lower than that in the foregoing embodiment. Moreover, the spraying pressure of the slurry thereof is caused to be higher than that in the foregoing embodiment. In addition, in a second method, first, the catalyst slurry is sprayed onto the second surface 13 of the filter cloth substrate 11 toward the upstream side Du, and then the adsorbent slurry is sprayed onto the second surface 13 of the filter cloth substrate 11 toward the upstream side Du. In this second method, the particulate catalysts 16 or the particulate adsorbents 17 adhere to the second surface 13.

The adsorbents 17 of the foregoing embodiment consist of only ordinary activated carbon. However, as described above, particulate impregnated activated carbon may be used or a mixture of particulate activated carbon and particulate impregnated activated carbon may be used as the particulate adsorbents 17.

In ordinary activated carbon, as described above using Fig. 5, the adsorption rate of mercury drops as the concentration of bivalent mercury drops. On the other hand, in impregnated activated carbon in which ordinary activated carbon is impregnated with a halide, as shown in Fig. 5, even if the concentration of bivalent mercury varies, there is a slight variation in the adsorption rate of mercury. Further, this adsorption rate substantially coincides with the adsorption rate of ordinary activated carbon at the time when the concentration of bivalent mercury is 100 wt%. In addition, in ordinary activated carbon, due to a relationship in which the adsorption rate varies in accordance with the concentration of mercury, a part of mercury adsorbed at the time of a high concentration of mercury is sometimes released when the concentration of mercury becomes low. On the other hand, in impregnated activated carbon which has once adsorbed mercury, this mercury is not released unless special processing is performed.

For this reason, regardless of the concentration of bivalent mercury, mercury is stably adsorbed, and when it is desired that adsorbed mercury be prevented from being released, only particulate impregnated activated carbon or a mixture of particulate activated carbon having a high mixing proportion of particulate impregnated activated carbon may be used as the adsorbents 17. In contrast, when sudden increase of the concentration of mercury temporarily occurs a number of times, in order to extend the usage period of the adsorbents 17, only particulate activated carbon or a mixture of particulate activated carbon having a low mixing proportion of particulate impregnated activated carbon may be used.

### Embodiment of bag filter

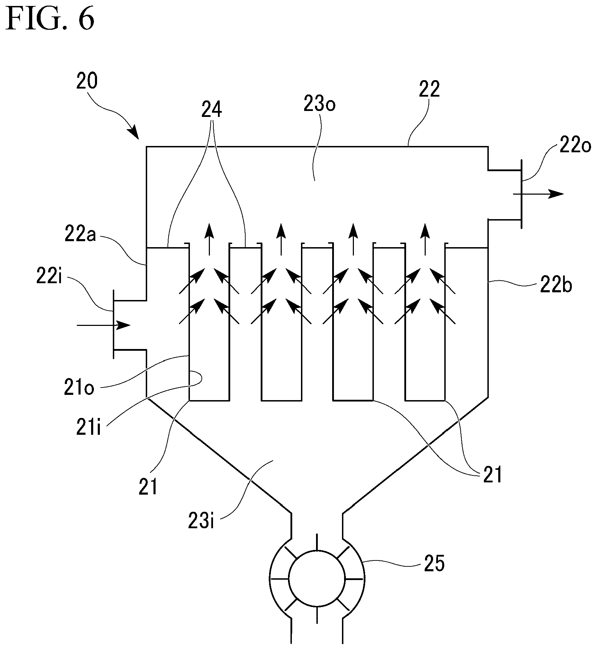

Hereinafter, the bag filter of the present embodiment will be described with reference to Fig. 6.

A bag filter 20 of the present embodiment includes a plurality of filters 21 formed of the filter cloth of the embodiment or the modification example thereof described above, a bag filter case 22 accommodating the plurality of filters 21, a filter support member 24, and a discharger 25.

The filter cloth of the embodiment or the modification example thereof described above is sewed to have a bag shape and forms the filters 21. The first surface 12 of the filter cloth substrate 11 constitutes outer surfaces 21o of the bag-shaped filters 21, and the second surface 13 of the filter cloth substrate 11 constitutes inner surfaces 21i of the bag-shaped filters 21.

The bag filter case 22 has an inlet 22i through which gas flows in to the inside and an outlet 22o through which gas flows out from the inside. The inlet 22i is formed in a first side plate 22a of the bag filter case 22, and the outlet 22o is formed in a second side plate 22b of the bag filter case 22. The discharger 25 is connected to a lower portion of the bag filter case 22. For example, this discharger 25 is a rotary valve and discharges powder such as dust staying inside the bag filter case 22 to the outside.

The filter support member 24 is disposed inside the bag filter case 22 and supports the plurality of bag-shaped filters 21.

The inside of the bag filter case 22 is partitioned into a space 23i on the inlet side and a space 23o on the outlet side by the plurality of bag-shaped filters 21 and the filter support member 24. The outer surfaces 21o of the bag-shaped filters 21 supported by the filter support member 24 face the space 23i on the inlet side, and the inner surfaces 21i of the filters 21 face the space 23o on the outlet side. Thus, the first surface 12 of the filter cloth substrate 11 forming the filters 21 faces the space 23i on the inlet side, and the second surface 13 of the filter cloth substrate 11 faces the space 23o on the outlet side.

In the bag filter 20 of the present embodiment, powder such as dust included in gas flowing in from the inlet 22i is captured by the filters 21, and this powder can be discharged to the outside from the discharger 25. Moreover, since the bag filter 20 of the present embodiment includes the filters 21 formed of the filter cloth of the embodiment or the modification example thereof described above, mercury in gas can be efficiently removed using this filter cloth. Gas which has passed through the filters 21 is discharged to the outside through the outlet 22o.

### Embodiment of gas processing apparatus

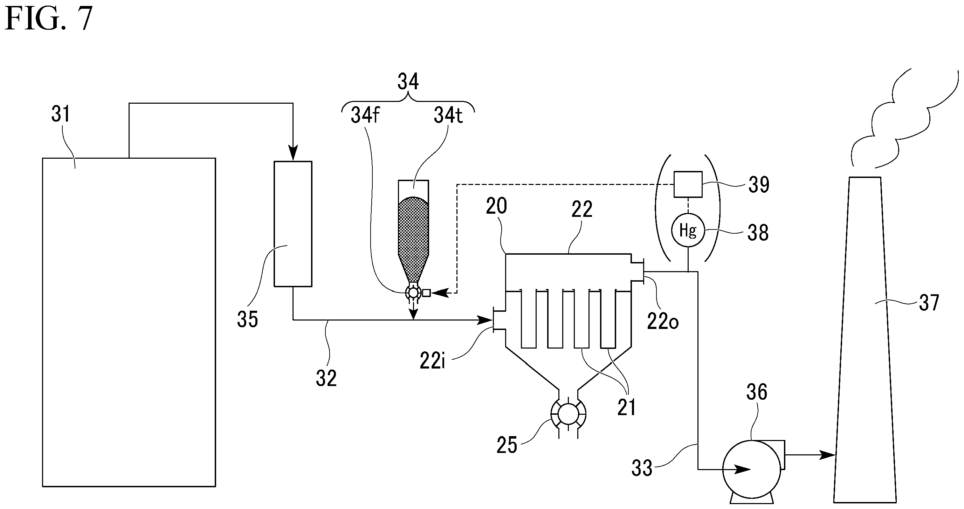

Hereinafter, the gas processing apparatus of the present embodiment will be described with reference to Fig. 7.

The gas processing apparatus of the present embodiment includes the bag filter 20 of the embodiment described above, a plurality of pipes 32 and 33, an adsorbent feeding device 34, a gas cooler 35, and a blower 36.

The pipes 32 and 33 are constituted of an upstream-side pipe 32 and a downstream-side pipe 33. The upstream-side pipe 32 connects a gas generation source 31 such as a garbage incinerator and the inlet 22i of the bag filter 20 to each other. The downstream-side pipe 33 connects the outlet 22o of the bag filter 20 and a smokestack 37 to each other. The blower 36 is provided in the downstream-side pipe 33, suctions gas inside the bag filter 20, and sends this gas to the smokestack 37.

The adsorbent feeding device 34 is connected to the upstream-side pipe 32. This adsorbent feeding device 34 has a tank 34t storing particulate adsorbents and a feeder 34f feeding adsorbents into the upstream-side pipe 32 from the tank 34t. This feeder 34f is a rotary feeder, for example.

The gas cooler 35 is provided on the gas generation source 31 side from the adsorbent feeding device 34 in the upstream-side pipe 32. This gas cooler 35 reduces the temperature of gas from the gas generation source 31 to a temperature lower than a heatproof temperature of the filters 21.

When the gas generation source 31 is a garbage incinerator, sometimes mercury-containing substances, such as a mercury thermometer including mercury, are fed in together with garbage. Such mercury-containing substances are often fed to the garbage incinerator randomly. For this reason, sometimes the concentration of mercury in gas discharged from the garbage incinerator increases in a spike form. That is, the concentration of mercury in gas discharged from the garbage incinerator increases in a very short period of time and decreases in a very short period of time. In addition, toxic substances such as dioxin are often included in gas.

In the gas processing apparatus of the present embodiment, a constant amount of particulate adsorbent is regularly fed into the upstream-side pipe 32 from the adsorbent feeding device 34. The adsorbents fed into the upstream-side pipe 32 adsorbs dioxin or the like which is included in gas flowing in this upstream-side pipe 32. The adsorbents which have adsorbed dust, dioxin, or the like included in gas flowing in the upstream-side pipe 32 are captured by the filters 21 inside the bag filter 20. Dust or the adsorbents captured by these filters 21 are shaken off from the filters 21 and then discharged to the outside from the discharger 25. Thus, the adsorbents 17 of the filters 21 are barely used for adsorbing mercury, dioxin, or the like.

When the concentration of mercury in gas discharged from the gas generation source 31 increases in a spiked shape, unless the amount of adsorbents regularly fed into the upstream-side pipe 32 from the adsorbent feeding device 34 is extremely increased, a large amount of mercury cannot be adsorbed by these adsorbents. In the present embodiment, mercury which cannot be adsorbed by the adsorbents from the adsorbent feeding device 34 is adsorbed by the adsorbents 17 of the filters 21 of the bag filter 20.

As described above, in the present embodiment, while the amount of adsorbents fed from the adsorbent feeding device 34 is curbed, mercury in gas increasing in a spiked shape can also be removed.

The adsorbents fed from the adsorbent feeding device 34 may consist of only ordinary activated carbon similar to the adsorbents 17 included in the filters 21 of the bag filter 20, may consist of only impregnated activated carbon, and may consist of a mixture of ordinary activated carbon and impregnated activated carbon.

In addition, in the foregoing embodiment, a constant amount of particulate adsorbent is regularly fed into the upstream-side pipe 32 from the adsorbent feeding device 34. However, as shown in Fig. 7, the gas processing apparatus may include a concentration meter 38 which detects a Hg concentration in gas and a feeding amount control device 39 which controls the amount of the adsorbents 17 fed into the upstream-side pipe 32 from the adsorbent feeding device 34 in accordance with the Hg concentration detected by the concentration meter 38. When the Hg concentration detected by the concentration meter 38 exceeds a value set in advance, this feeding amount control device 39 increases the amount of the adsorbents 17 fed from the adsorbent feeding device 34.

The concentration meter 38 may be provided in the downstream-side pipe 33 or may be provided in the upstream-side pipe 32 or the smokestack 37. When the concentration meter 38 is provided in the downstream-side pipe 33, at least a part of gas including mercury has flowed into the bag filter 20 at the time when the Hg concentration detected by this concentration meter 38 has increased. For this reason, even if the amount of adsorbents fed to the upstream-side pipe 32 from the adsorbent feeding device 34 is increased after the Hg concentration detected by the concentration meter 38 has exceeded a value set in advance, these adsorbents can only adsorb only a part of mercury included in gas. On the other hand, when the concentration meter 38 is provided in the upstream-side pipe 32, gas including mercury is less likely to be flowing inside the bag filter 20 at the time when the Hg concentration detected by this concentration meter 38 has increased. For this reason, a large amount of mercury included in gas can be adsorbed using these adsorbents by increasing the amount of adsorbents fed to the upstream-side pipe 32 from the adsorbent feeding device 34 after the Hg concentration detected by the concentration meter 38 has exceeded a value set in advance. However, if the concentration meter 38 is provided in the upstream-side pipe 32, there are cases in which a probe of this concentration meter 38 is covered by dust or the like so that the concentration of mercury cannot be detected continuously. For this reason, when the concentration meter 38 is provided in the upstream-side pipe 32, there is a need for the probe of this concentration meter 38 to have a structure such that it is not covered by dust or the like or have a structure such that dust or the like can be shaken off even if the probe is covered by dust or the like.

### [Industrial Applicability]

According to the aspects of the present invention, Hg in gas can be efficiently removed.

### [Reference Signs List]

- 10: Filter cloth
- 11: Filter cloth substrate
- 12: First surface
- 13: Second surface
- 14: Gas flow channel
- 16: Catalyst
- 17: Adsorbent
- 19: Ratio variation region
- 20: Bag filter
- 21: Filter
- 21i: Inner surface
- 21o: Outer surface
- 22: Bag filter case
- 22a: First side plate
- 22b: Second side plate
- 22i: Inlet
- 22o: Outlet
- 23i: Space on inlet side
- 23o: Space on outlet side
- 24: Filter support member
- 25: Discharger
- 31: Gas generation source
- 32: Upstream-side pipe
- 33: Downstream-side pipe
- 34: Adsorbent feeding device
- 34t: Tank
- 34f: Feeder
- 35: Gas cooler
- 36: Blower
- 37: Smokestack
- 38: Concentration meter
- 39: Feeding amount control device
- Dt: Thickness direction
- Du: Upstream side
- Dd: Downstream side

## Claims

1. A filter cloth comprising:
one filter cloth substrate formed of a plurality of fibers;
particulate adsorbents which include activated carbon and have an ability to absorb Hg; and
particulate catalysts which have an ability to promote oxidation of Hg,
wherein the one filter cloth substrate has a first surface and a second surface facing sides opposite to each other, and
wherein a ratio of a density of the catalysts to a density of the adsorbents at a predetermined position on an upstream side that is the first surface side from the second surface is higher than a ratio of the density of the catalysts to the density of the adsorbents at a part on a downstream side that is the second surface side from the predetermined position.

2. The filter cloth according to claim 1 further comprising:
a region in which the ratio of the density of the catalysts to the density of the adsorbents gradually decreases toward the downstream side.

3. The filter cloth according to claim 1 or 2,
wherein the predetermined position is a position on the first surface.

4. The filter cloth according to any one of claims 1 to 3,
wherein the adsorbents and the catalysts do not adhere onto the second surface.

5. The filter cloth according to any one of claims 1 to 4,
wherein the adsorbents include the activated carbon and a halide,
wherein the activated carbon is impregnated with the halide, and
wherein the halide and the activated carbon form particulate impregnated activated carbon.

6. The filter cloth according to claim 5,
wherein the particulate impregnated activated carbon and the particulate activated carbon are mixed together in the adsorbents.

7. A bag filter comprising:
a filter formed of the filter cloth according to any one of claims 1 to 6; and
a bag filter case which internally accommodates the filter,
wherein the bag filter case has an inlet through which gas flows in and an outlet through which gas flows out, and
wherein the filter partitions an inside of the bag filter case into a space on the inlet side and a space on the outlet side and is disposed such that the first surface of the filter cloth substrate forming the filter faces the space on the inlet side.

8. A gas processing apparatus comprising:
the bag filter according to claim 7;
an upstream-side pipe configured to introduce gas from a gas generation source to the inlet of the bag filter; and
an adsorbent feeding device configured to feed particulate adsorbents including activated carbon and having an ability to absorb Hg into the upstream-side pipe.

9. The gas processing apparatus according to claim 8 further comprising:
a concentration meter configured to detect a Hg concentration in the gas; and
a feeding amount control device configured to control an amount of the adsorbents fed into the upstream-side pipe from the adsorbent feeding device in accordance with the Hg concentration detected by the concentration meter.

10. The gas processing apparatus according to claim 9 further comprising:
a downstream-side pipe connected to the outlet of the bag filter,
wherein the concentration meter configured to detect the Hg concentration in gas flowing in the downstream-side pipe.

11. A method for producing a filter cloth and executing
a preparation step of preparing one filter cloth substrate formed of a plurality of fibers, adsorbent slurry which contains adsorbents including activated carbon and having an ability to absorb Hg, and catalyst slurry which contains particulate catalysts having an ability to promote oxidation of Hg,
an adsorbent spraying step of spraying the adsorbent slurry onto a first surface, of the first surface and a second surface facing sides opposite to each other in the one filter cloth substrate, toward a downstream side that is a side of the second surface with respect to the first surface, and
a catalyst spraying step of spraying the catalyst slurry onto the first surface toward the downstream side after the adsorbent spraying step.

12. The method for producing a filter cloth according to claim 11,
wherein a catalyst concentration in the catalyst slurry is higher than an adsorbent concentration in the adsorbent slurry.
